# EUROPEAN PATENT APPLICATION

(11) **EP 1 460 586 A2**
(43) Date of publication of application: **22.09.2004**
(21) Application number: 04075750.2
(22) Date of filing: 08.03.2004
(51) Int. Cl.: G06T 5/50

(54) **Producing enhanced photographic products from images captured at known picture sites**

(30) Priority: 20.03.2003 US 392994
(71) Applicant: EASTMAN KODAK COMPANY, Rochester, New York 14650 (US)
(72) Inventor: Squilla, John R. c/o Eastman Kodak Company, Rochester, New York 14650-2201 (US); Fredlund, John R. c/o Eastman Kodak Company, Rochester, New York 14650-2201 (US); Manico, Joseph A. c/o Eastman Kodak Company, Rochester, New York 14650-2201 (US)
(74) Representative: Haile, Helen Cynthia

(57) **Abstract**

A photographic system is described for producing enhanced products from pictures of one or more known picture sites situated at predetermined locations and representing content of interest to a photographer. The system includes (a) a database containing content pertaining to the picture sites; (b) a camera for capturing images of the picture sites; (c) a processor for relating the captured images to the locations of picture sites, thereby identifying locations of the images, where the processor uses the locations of the images to access selected content in the database pertaining to the picture sites; and (d) a product generator for generating enhanced image products. In one embodiment, the data base contains stock images pertaining to the picture sites and the product generator combines the stock images pertaining to the content of the picture sites with the captured images of the picture sites to generate a new image product.

## Description

The invention relates generally to the field of photography, and in particular to a photographic system that is capable of acquiring digital data associated with the content of photos captured at known picture sites. More specifically, the invention relates to a method utilizing the acquired data for producing enhanced photographic products from images captured at such sites.

When pictures are taken by a photographer, e.g., especially an amateur or consumer photographer, using a traditional (film) or digital camera while visiting a known (or otherwise designated) picture site, such as a predetermined picturesque location at a theme park or at a National Park, it is desirable to identify and automatically enhance the images in order to produce a keepsake of the visit (album, interactive CD, DVD, etc.). The key enablers are: knowing the location of the picture sites where the consumer has captured the images, and having content information (e.g., audio, graphics, visual and/or textual descriptive content information, or the like) about the site.

It is known in the art that a traditional (film), electronic, or video camera can either record image information on a photographic film or store the information in electronic memory. It is also known in the art that a wireless transceiver can be used to transmit and receive data in low-power, portable environments, such as would be encountered in connection with the aforementioned picture sites. An example of such a device is shown in U.S. Patent No. 4,957,348, which describes a low-power optical transceiver including an IR transmitter-receiver. Digital cameras also have the capability of storing additional information along with the image. An example of a digital camera with such capability is the Kodak DCS 460 Digital Camera, which is capable of storing voice annotation and Global Positioning System (GPS) parameters along with the digital image. Moreover, Advanced Photo System™ cameras, which are sold by Eastman Kodak Company and others, use a photographic film referred to as Advantix™ film, which allows the camera to store digital information on a clear magnetic layer on the back of the film. This feature is disclosed in commonly-assigned U.S. Patent No. 5,194,892, which also describes an information exchange system for users of such film, such as a camera user and a photofinisher.

In U.S. Patent No. 5,296,884, a still video or a film camera can receive location coordinates, such as GPS signals, from a wireless source, and then convert that information to a location name such as a name of a city. The city name is then stored with the video image or recorded on the film. In addition to place names, the patent alludes to the possibility of storing various data relating to place, such as origins of city names and special products of the region. Moreover, a local transmitting station may be installed which transmits codes relating to place directly to the camera, e.g., in tourist areas or facilities. In U.S. Patent No. 5,479,228, a camera system includes a memory that can store a set of optional phrases such as "Happy New Year" and "Happy Birthday", which then can be stored on the magnetic layer of Advantix™ film and printed on a photograph during a subsequent processing operation.

Commonly assigned U.S Patent No. 5,768,633 discloses a photographic and data transmission system especially for use at a tradeshow. A wireless communication system is installed at a booth in a tradeshow for transmitting wireless information related to a product on display, such as the product name, company name, price and the Uniform Resource Locator (URL) address of the product source on the Internet. The other part of the system is a camera capable of receiving the wireless transmission. When the camera is brought into the vicinity of the booth and captures an image of the product, a trigger signal from the camera initiates transmission of the wireless signal from the tradeshow booth. The camera then stores the product data with the image or stores a URL address that can direct the user to more information via the Internet.

EP Patent Specification No. EPO 640 938 B1 describes a personalized image recording system intended to create still images or video collections for guests of amusement parks. Each guest is associated with a unique identifier in the form of a readable tag worn by the guest. When the tag is brought into the vicinity of an attraction, the tag triggers a camera located at the attraction to capture an image, e.g., of the guest. A communications network interconnects the cameras and tag readers with a central control system that creates collections of images, including the captured images and other prerecorded stock footage. The control system arranges the images, according to preferences of the guest, into collections that capture the experience of visiting the amusement park.

In commonly assigned U.S. Patent No. 6,396,537, a photographic system utilizes data associated with a scene location, e.g., a visitor attraction site, that is capable of interactive communication with a user. The attraction site stores content data related to the site, and the user communicates with the attraction site through a camera that is enabled for such communication. Besides capturing an image associated with the site, the camera stores predetermined personality data that relates an interest of the user to the content data and includes means for transferring the personality data to the attraction site. The camera further includes means for receiving and displaying the portion of the content data from the attraction site that is relevant to the user's preferences, and a user interface for selecting from the displayed content data that part which the user wants to keep. In this manner, information relevant to a user's interests about a photographed item can be easily requested, accessed and stored with the specific pictures that the user has captured.

In U.S. Patent No. 6,337,951, a data sender is installed in a designated place, like a particular animal cage at a zoo, where the probability of photography is high. The data sender sends out photo data, such as a place ID, relating to the designated place. A receiver for receiving photo data from the data sender and a data storage device for storing the photo data are incorporated into a camera. The photo data is then written into the data storage device in association with an image captured by the camera at the designated place. The photo data is later retrieved from the camera and used to access data corresponding to the scene, such as the name and history of the photo subject. The scene data may be used in an electronic album, an image data base, or as print data.

Consequently, if a person takes a picture at a known location and there has been content collected about that site, the combination of knowing where and when the picture has been taken and the collected content information can allow the enhancement of both the image and the way it is presented. In particular, digital images, captured by either a digital camera or digitized from images captured on film, can thus be used to create multimedia files. These files combine still images and other types of data such as text, graphics, audio and video. Gathering the extra digital information needed for creating a multimedia file is a time-consuming process. The Internet and World Wide Web has made that process easier, but much of the content useful for the multimedia files is copyrighted and not readily available on the Internet sites. Moreover, the user needs a multimedia computer to put the information together. The user also needs to locate the URL addresses of these information sites.

The drawback with the present systems is the information overload and the processing required, that is, the volume of information can overwhelm the casual user who is trying to assemble a record associated with a particular event, e.g., say a visit to a theme park or a site in the National Park system. Moreover, the processing involved in creating an enhanced photo product can challenge the capability (as well as the time and interest) of the ordinary consumer. It would be desirable to find a convenient way to combine the information handling capability of modem cameras with image recording so that information relevant to a user's interests can be easily requested and accessed about a photographed item. This would then lead to an enhanced photo product with minimal impact upon the consumer.

The present invention is directed to overcoming one or more of the problems set forth above. Briefly summarized, according to one aspect of the present invention, a photographic system is described for producing enhanced products from pictures of one or more known picture sites situated at predetermined locations and representing content of interest to a photographer. The system includes (a) a database containing content pertaining to the picture sites; (b) a camera for capturing images of the picture sites; (c) a processor for relating the captured images to the locations of picture sites, thereby identifying locations of the images, where the processor uses the locations of the images to access selected content in the database pertaining to the picture sites; and (d) a product generator for generating enhanced image products. In one embodiment, the data base contains stock images pertaining to the picture sites and the product generator combines the stock images pertaining to the content of the picture sites with the captured images of the picture sites to generate a new image product.

Based on the ability of the invention to relate a known picture site with valuable content related to the site, the advantage of the invention is that it provides the casual consumer with an enhanced product, namely, a cherished keepsake (e.g., album, interactive CD, DVD, etc.) of the visit to the site.

These and other aspects, objects, features and advantages of the present invention will be more clearly understood and appreciated from a review of the following detailed description of the preferred embodiments and appended claims, and by reference to the accompanying drawings.

FIG. 1 is a combined pictorial and block diagram of a photographic system for producing enhanced photographic products from images captured at known picture sites in accordance with the invention.

FIG. 2 is a block diagram of a digital camera used in the photographic system shown in Figure 1.

FIG. 3 is a block diagram of a film camera used in the photographic system shown in Figure 1.

FIG. 4 is a flow diagram of a method for creating, and adding to, a content database.

FIG. 5 is a flow diagram of a method, including on-line registration, for customer interface with the system and method according to the invention.

FIG. 6 is a flow diagram of a method, including on-site registration, for customer interface with the system and method according to the invention.

FIG. 7 is a flow diagram of a method for generating an enhanced photographic product from a currently captured image and a reference (stock) image.

FIG. 8 is an example of an enhanced photographic product prepared according to the method of Figure 7 for a currently captured photo and a historically related stock image (then and now photos).

FIG. 9 is a flow diagram of a method for generating an album from customer photos.

FIG. 10 is a flow diagram of a method for generating a CD or DVD from customer photos.

FIGS. 11A and 11B show a flow diagram and a product example of a method for generating an adhesive sticker printed with content data, that attaches to the back of a print.

FIGS. 12A, 12B and 12C are pictorial diagrams of a data collection system that attaches to a traditional (film) or digital camera for collecting meta data associated with picture sites.

FIG. 13 is a flow diagram of a method for using the system shown in Figure 12.

FIG. 14 is a pictorial diagram showing use of the attachment shown in Figure 12A with a single use camera.

FIG. 15 is a flow diagram illustrating an image removal option for images recorded on a CD or DVD generated according to flow diagram in Figure 10.

FIG. 16 is a combined pictorial and block diagram of an additional embodiment for producing enhanced photographic products from images captured at known picture sites in accordance with the invention, wherein the collection of location data is separate from image data.

Because photographic systems employing data collection relating to specific sites are well known, the present description will be directed in particular to elements forming part of, or cooperating more directly with, system and method in accordance with the present invention. Elements not specifically shown or described herein may be selected from those known in the art. Certain aspects of the embodiments to be described may be provided in software. Given the system and method as shown and described according to the invention in the following materials, software not specifically shown, described or suggested herein that is useful for implementation of the invention is conventional and within the ordinary skill in such arts.

Still further, as used herein, the computer program may be stored in a computer readable storage medium, which may comprise, for example; magnetic storage media such as a magnetic disk (such as a hard drive or a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

There are locations, referred to herein as picture sites or attraction sites, that inspire people due to their natural beauty, uniqueness or historical significance. Often this inspiration includes taking a photo at that location. The specifics of that location's significance are often noted in some sort of signage or kiosk. People sometimes take a picture of the sign to help them remember these details. However, much of the information about the site is lost (or simply never known because much of the detail is not shown and/or rarely updated).

The invention described herein discloses a methodology and a system for automatically capturing necessary information at these sites and then allowing for this information to drive additional media (movies, pictures, sounds and the like) which can be automatically placed into a digital review of the trip/occasion, or enhance albums or even individual photos. The information can also be utilized by individuals to personally enhance their memories (scrapbooks, web sites, traditional albums, etc.).

The embodiments shown herein utilize various techniques for gathering information related to the sites. One technique is based on using the Global Positioning System (GPS), perhaps together with an electronic compass, to collect location information. Radio frequency (RF), infra red (IR) and image identification methodologies can also be used to gather location information. Using a GPS device, the location of the individual (and, with a compass, the direction toward which the camera is pointing) may be determined at the time of image capture. If a photofinisher has access to this information, for example by means of correlating images to location information on the basis of time of capture, content corresponding to the location can be added to output created for the consumer. Similarly, if RF or IR transmitters are located at the picture site, and the camera or another device in the possession of the consumer is capable of capturing the transmitted data, the location can be determined from this data.

One advantage of an image identification methodology is that it does not require any additional hardware or software in the camera. As mentioned above, however, if image identification is not used, GPS, RF, IR or like technology can provide the additional information needed to perform the tasks required. However, most cameras are not equipped with either of these technologies. Accordingly, the present invention also provides a means to allow standard 35mm and single use cameras to be equipped with the means necessary to determine the location and to associate it with a particular frame of film.

Even if there is no mechanism to directly determine the location of the captured image, the images captured by the consumer may be submitted to the photofinisher for image analysis and correlation. For instance, the photofinisher or his agent previously captures, or has access to, a professional set of images corresponding to the same picture sites. This professional set is used as the basis of comparison so that the location of capture of the consumer image can be determined. Many aspects of the consumer images may be analyzed for determination of "degree of similarity" to the professional set. One technique of detecting similarity is to use an algorithm that first subtracts the consumer image from the professional image to form a difference image. If the images are similar, a histogram of the difference image will exhibit a large clustering of values around zero. When the algorithm determines that there is a high degree of similarity, the location of capture is considered to match, and additional content can be added to the output, increasing the value of the consumer's images and imaging experience. Alternatively, a trained operator can compare the consumer images with the professional set of images and thereby determine the location of consumer images. A special feature of this approach is that the match can be used to identify a subset of stored content, including images, that pertain to the particular picture site location. This is useful in reducing the amount of content that must be examined and processed.

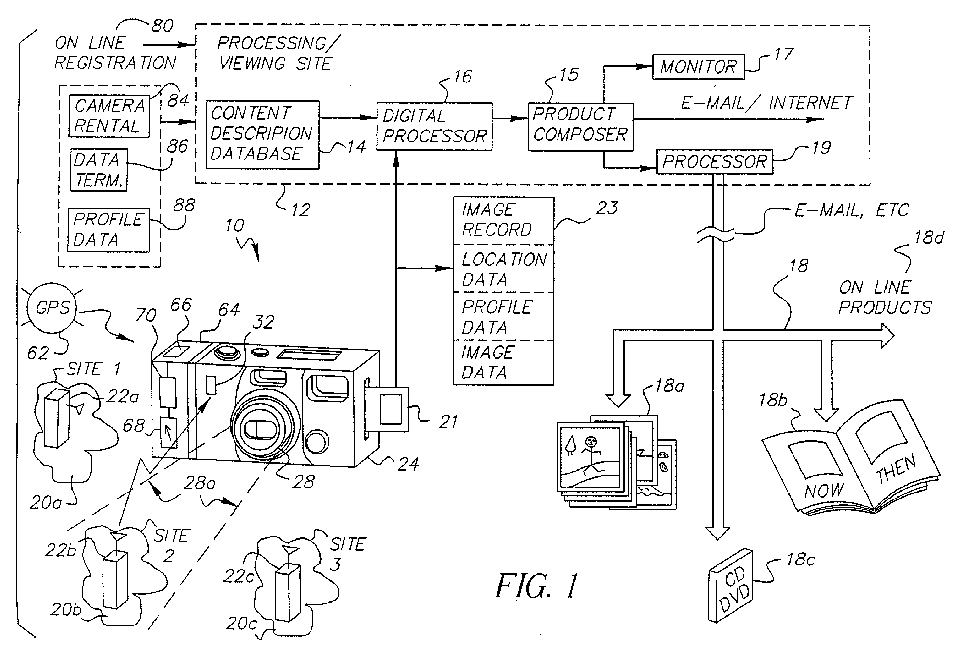

Referring first to Figure 1, a photographic system is shown for producing enhanced products from pictures captured by a camera capable of additionally capturing location data from which one or more known picture sites may be identified. Each picture site is situated at a predetermined location that represents content of interest to a photographer. The photographic system includes a capture subsystem 10 for capturing images of picture sites and for capturing location data relating the images to the locations of the picture sites, thereby identifying the locations of the images. The photographic system further includes a processing subsystem 12 including a database 14 containing content pertaining to the picture sites and a digital processor 16 using the locations of the images to access selected content in the database 14 pertaining to the picture sites. The processing subsystem 12 then generates enhanced image products 18 from the images by utilizing the selected content pertaining to the picture sites.

The capture subsystem 10 captures images at known picture or attraction sites 20a, 20b and 20c, where a picture is likely to be taken, and additionally where its location data may be determined and obtained. Such attraction sites could be varied and widely spaced, for example including user accessible viewing points within theme parks, amusement parks, sporting sites, National Park system sites, and the like. In one embodiment, each attraction site includes a wireless communication station 22a, 22b and 22c that communicates the location data to the capture subsystem 10. The location data is combined with the image data in a record 23 that is delivered to the digital processor 16 on, e.g., a memory card 21. The location data is matched with content description for that location in the content database 14. The digital processor 16 delivers the selected content description to a product composer 15, which may also access product-related choices from a customer/photographer. The product may be applied to a monitor 17 for review by the customer and/or an operator of the processing subsystem 12. For example, the product image on the monitor 17 may function as an electronic proof of an optional final output product, where the user then has input to modify and/or change the image. Given site identification at this stage, a menu of choices for potential changes can be presented to the user appropriate for that particular site. A selected product is applied to a fulfillment processor 19, which produces the enhanced image products 18. These products may take many forms, as will be described, including a package of prints 18a, an album 18b, a CD or DVD 18c, or an on-line product 18d, where each product shows content from the database 14 together with the captured images.

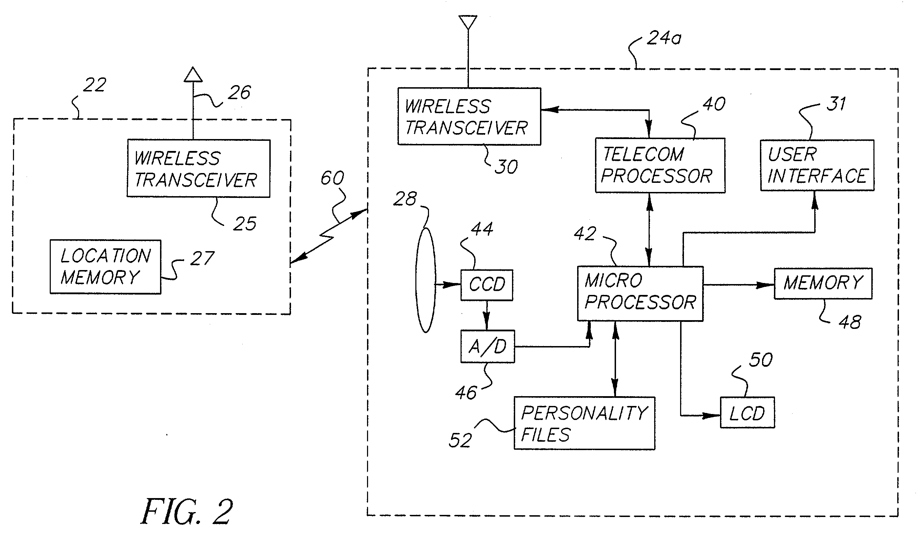

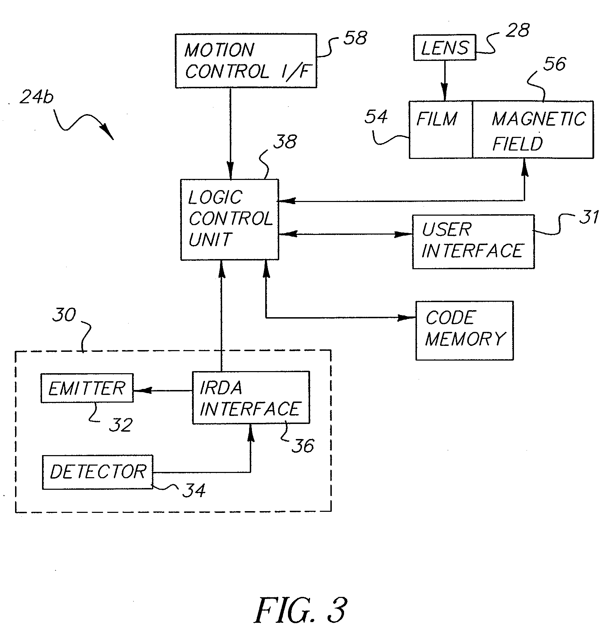

The capture subsystem includes a camera 24. Preferably, the camera 24 is either a digital camera 24a as shown in block diagram in Figure 2 or an Advantix™ film camera 24b as shown in block diagram in Figure 3, although other capture devices are included herein without limitation, such as a digital camera incorporated into a cell phone or a personal digital assistant (PDA), or the like. As shown in Figures 2 and 3, both types of cameras capture an image of an attraction site through a lens section 28 which, as shown in Figure 1, would have a field of view 28a including the attraction site. As shown in Figure 2, the wireless communication station 22 at each attraction site includes a wireless transceiver 25 that interchanges signals with an antenna 26. A location memory 27 provides location data to the wireless transceiver 25. Alternatively, the station can comprise a radio frequency identification (RFID) tag (not shown) that is encoded with data identifying the attraction site. The camera would then include an RFID interrogation unit that would be activated in the vicinity of the RFID tag. Given this transmission capability of the station 22, the attraction site 20 functions as a "communicating scene", specifically by transmitting a scene location ID to a particular user.

Both cameras 24a and 24b include a transceiver section 30 for communicating with the station 22. Both cameras also include a user interface 31 for communicating user commands to the camera, such as the desire to capture an image, and some type of processing modality, such as a microprocessor 42 or a logic control unit 38. As shown in more detail in one embodiment in Figure 3, the transceiver section 30 may include an infrared emitter 32 and an infrared detector 34 connected through a conventional IrDA interface 36 to the logic control unit 38. The transceiver section 30 in the digital camera 24a may also include an IR emitter-detector system as shown in Figure 3; alternatively, both cameras may include other types of transceivers, such as a radio-frequency (RF) transceiver system, or an RFID tag-based system. For the digital camera shown in Figure 2, the transceiver signal is intercommunicated between a telecommunications processor 40 and the microprocessor 42.

Referring to Figure 2, an image is focused by the lens section 28 upon a charge coupled device (CCD) image sensor 44, which generates an image signal from the captured image. The image signal is converted into a digital signal by an A/D converter 46, processed by the microprocessor 42 and stored in a memory 48. The memory 48 may take any number of conventional forms, including a removable memory such as a memory card or a small hard drive card. The image signal, as well as content data related to the image, may be viewed on a liquid crystal display (LCD) 50. As a further feature, personality data descriptive of the user may be stored in a personality file 52, as described in detail in the aforementioned U.S. Patent No. 6, 396,537, which is incorporated herein by reference. The personality data relates one or more interests of the user to at least a portion of the content data in the content database 14.

In the case of the film camera 26 shown in Figure 3, the lens section 28 forms an image upon a photosensitive film 54. Preferably, the film 54 is an Advantix™ film including a magnetic portion 56 which can store the personality data, as well as additional data received by the transceiver section 30. Recording on the magnetic portion 56 is coordinated with a motion control interface 58 such that recording occurs when the film 54 is in motion, e.g., during film advance between exposures. For the film camera shown in Figure 3, the processing subsystem 12 may include a photofinishing capability for developing and scanning the film, or such development and scanning may be provided at some ancillary facility.

When the digital camera 24a or the film camera 24b is brought into the communicating range of the attraction site, and a photograph is taken at that site, an exchange takes place between the camera and the corresponding wireless communication station via a wireless link 60. More specifically, location data is uploaded to the camera 24a or 24b, which is eventually processed to establish identification of the site. For both types of cameras, the captured image is stored in an image recording memory (the memory 48 in the digital camera 24a or the Advantix™ film 54 in the film camera 24b), and the selected content data is stored in the memory 48 or in the magnetic portion 56 on the film 54, and therewith appended to or associated with the image. In typical usage of this system, the user actuates a capture release in the user interface 31, the respective camera captures the selected image, and the location data is captured by the camera. In particular, the location data would ordinarily not be captured by the camera until the user actually captures an image. This allows the user to point the camera and to frame an image without initiating any data transfer between the camera and the attraction site. Consequently, although it does not have to be the case, the image capture and the data transfer ordinarily occur contemporaneously, and substantially simultaneously. With the film camera 24b, the selected data is appended to the image data somewhat later in time, e.g., when the film is advanced. With the digital camera, the data transfer results in appending the correlated data contemporaneously with image capture. (Although not specifically disclosed, it should be understood that the camera may include a mode switch or the like so that the inventive features can be disabled, and the camera can operate conventionally to capture an image without triggering any communication between the camera and the attraction site.)

In a second embodiment, referring to part of Figure 1, the location data may be obtained from a global positioning system (GPS) source, such as one or more GPS satellites 62. In this embodiment, a GPS receiver is provided either as part of the camera or as an attachment 64 that is separate from the main camera body but connectable through contacts (not shown) to the camera body (it may be useful to keep the main camera body small by having the GPS receiver separate from the camera). The attachment 64 also includes an antenna 66 for receiving a GPS signal from the GPS satellite 62 and an angular position sensor 68 (such as a compass and, if necessary, an inclination detector) for deriving the angular orientation of the field of view axis of the camera 24a or 24b. The latitude, longitude data obtained from a GPS processor 70 and the angular orientation of the axis of the field of view of the camera fully define the line of sight of the camera to the attraction site. The location data thus would be a set of specific GPS coordinates and a set of specific angular coordinates. Although further detail is usually not necessary, a range finder could also be used to determine the distance of the main object in the image from the camera, thus fully constraining the location of the attraction site.

In an additional embodiment, a local GPS system could be used within the confines of a particular location offering many potential attraction sites, such as a theme park or a National Park. The local GPS system would include at least two radio frequency sources, e.g., positioned in line of sight of camera users, that would combine with the radio signal from the transceiver associated with the camera to form a three signal triangulation that would serve to locate any objects within the known transmission space. Alternatively, a cellular telephone transmission can be used for triangulation. For instance, cellular telephones equipped with digital cameras provide time and date information whenever a photo is taken. In addition, the location of the user can be determined by triangulation according to their proximity to cell phone towers.

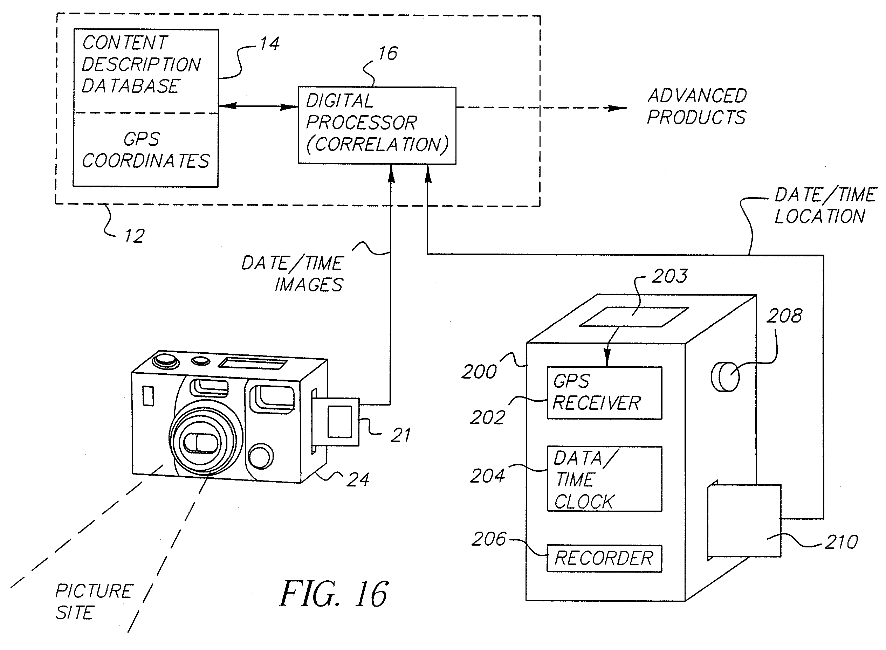

In yet another embodiment shown in Figure 16, the GPS system is configured as a separate recording device 200 that is carried around by the photographer as the picture sites are visited. The device 200 contains a GPS receiver 202 connected to an antenna 203 for receiving location coordinates from a GPS satellite, a clock 204 for generating date/time information corresponding to the received coordinates, and a recorder 206 for recording the GPS coordinates together with the date/time of their reception. Such a device 200 can be a small package that is, e.g., attached to a belt, carried in a bag, or the like. It may run continuously, providing a continuous stream of date/time and GPS information, or it can run intermittently under control of a start button 208. The GPS and date/time information is recorded upon internal memory in the recorder 206 and/or in a memory card 210 that is removable and delivered to the processing subsystem 12. The camera 24, whether film or digital, also includes a date/time clock generator that provides date/time information corresponding to each image capture. The captured images and their corresponding date/time information are delivered to the processing subsystem 12 on the memory card 21, or recorded on a film if the camera is a film camera (e.g., recorded on the magnetic recording area of APS film). As yet another alternative, the camera 24 could be a single use camera with a clock attachment for producing date/time information that is recorded on the film, or on a recording device in the camera. The whole single use camera is then delivered to the processing subsystem 12.

For the embodiment shown in Figure 16, the date/time information from the camera 24 and the device 200 is used to correlate the location information from the GPS receiver 202 with the images captured by the camera 24. More specifically, the content description database 14 contains a library of stored content, including images, pertaining to the picture sites. The camera 24 captures images at a particular picture site location and records date/time information with the images, and the recording device 200 carried by the photographer records date/time and location information. The digital processor 16 then correlates the date/time information recorded by the camera 24 and the recording device 200 in order to relate the location information to the captured images and to the content stored in the database 14. A special feature of this approach is that the correlation can be used to identify a subset of stored content, including images, in the library that pertain to the particular picture site location. This is useful in reducing the amount of content that must be examined and processed. The processor 16 then processes the subset of stored content, including images, and the captured images to identify the stored content of the picture site that is shown in the captured images. One way of processing the data is to use an image processing algorithm, such as the aforementioned image identification methodology, for correlating objects found in the subset of stored images with objects in the captured images, thereby identifying the content of the picture site shown in the captured images. Finally, the product composer 15 (see Figure 1) generates an enhanced image product by associating the identified stored content of the picture site with the captured images to generate a new image product.

In yet another variation of the embodiment shown in Figure 16, the location information can be manually entered via a device such as a keypad (in place of the GPS receiver 202) by the photographer and stored as above with the date/time information from the clock 204. Furthermore, if the database should contain content about objects that are situated between picture sites, the processor 16 may correlate the date/time information recorded by the camera 24 and the recording device 200 in order to relate the location information to the captured images and to a plurality of picture sites in the database corresponding to the captured images. Then, the processor 16 uses the locations of the plurality of picture sites to interpolate an estimated location relative to, e.g., between, the plurality of picture sites, and thereby identify stored content in the database associated with the estimated location. Then, the product composer 15 generates an enhanced image product by associating the identified stored content of the estimated location with the captured images to generate a new image product. This process will work not only for content unassociated with any picture site, but also picture sites encountered during the travel of the photographer, but for which no image was captured. It should also be noted that the correlation can be performed on just the time information, and such is meant to be understood when reference is made to date/time information.

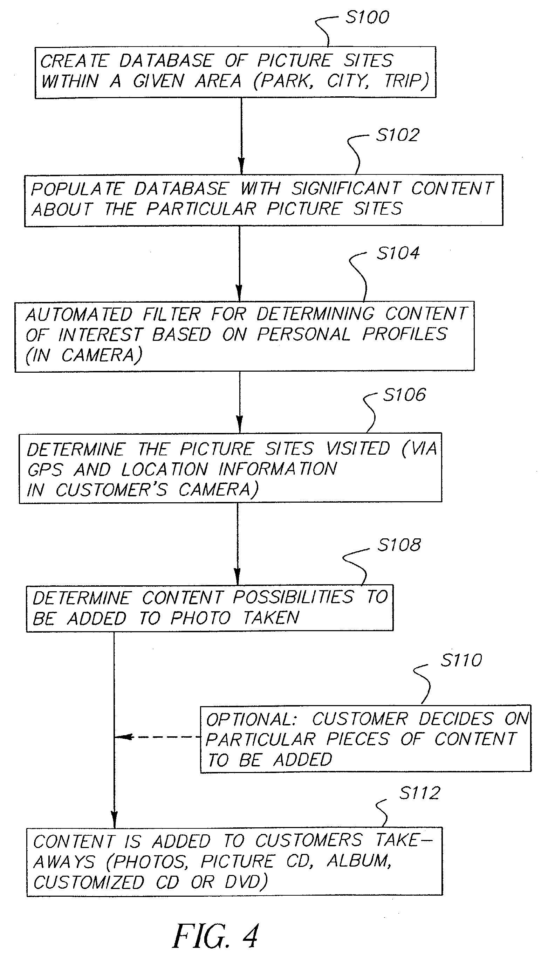

Figure 4 illustrates the process steps involved in adding content to the images captured by a customer/photographer. The first step S100 is to create a database of picture sites, which would typically be done within a certain geographic area, or in relation to a certain activity, e.g., within a park or a city, or during a trip. Content is collected from various sources, and in step S102 the database 14 is populated with significant content about the particular picture sites. Certain content may have more relevance to some persons than others; this is reflected in the personality files 52 in the camera (Figure 2). For instance, some persons may have more interest in historical aspects of the attraction sites than other persons, and the personality files reflect that interest. Consequently, in step S104 an automated filter may be employed to determine content of interest based on the personal profiles. The processing subsystem 12, in step S106, utilizes the location data captured by the camera 24a or 24b to determine the picture sites visited.

The processing subsystem 12 may utilize a variety of techniques to determine the picture sites visited, depending on the nature of the location data. If the location data is an actual attraction site ID code that is transmitted to the camera from the communication stations 22, the processor 16 will access a reference list of likely attraction sites and their site IDs (which may be part of the content database 14), and then match the transmitted site ID with the reference list to determine the picture site visited. If the location data is a set of GPS coordinates, perhaps enhanced by angular coordinates, or coordinates obtained by local triangulation, the processor 16 will compare the coordinates to a database of coordinates for given attraction sites to determine the picture site visited. The angular coordinates may be necessary when more than one attraction site is visible from the same set of GPS coordinates.

From the knowledge of the picture sites visited, the digital processor 16 accesses the content database 14 and determines the content possibilities (step S108) that can be added to the photo that has been captured. (An optional step S110 may been employed, e.g., utilizing optimal input from use of the monitor 17, to allow the customer to decide on the particular pieces of content from the database 14 that are to be added to the photo.) Finally, in step S112, the enhanced image products 18 are composed by the product composer 15 by adding the content to the customer products, whether that may be photos, Picture CDs, an album, a customized CD or DVD, or the like. For instance, photo albums may be automatically created according to such methods as disclosed in commonly assigned U.S. Patent Nos. 6,288,719 and 6,362,900, both entitled "System and Method of Constructing a Photo Album", and both incorporated herein by reference.

As shown in Figure 1, there is provision for on-line registration 80 for use of the enhanced photographic system. In addition, there is a local registration site 82 which provides for local registration and camera rental 84. Local registration can be completed through a data terminal 86, through which personal information may be entered. For instance, personal profile data 88 may be entered at this time. Also, on-line registrants may still visit the local registration site 82 to pick up a rental camera (where the rental could be arranged on-line).

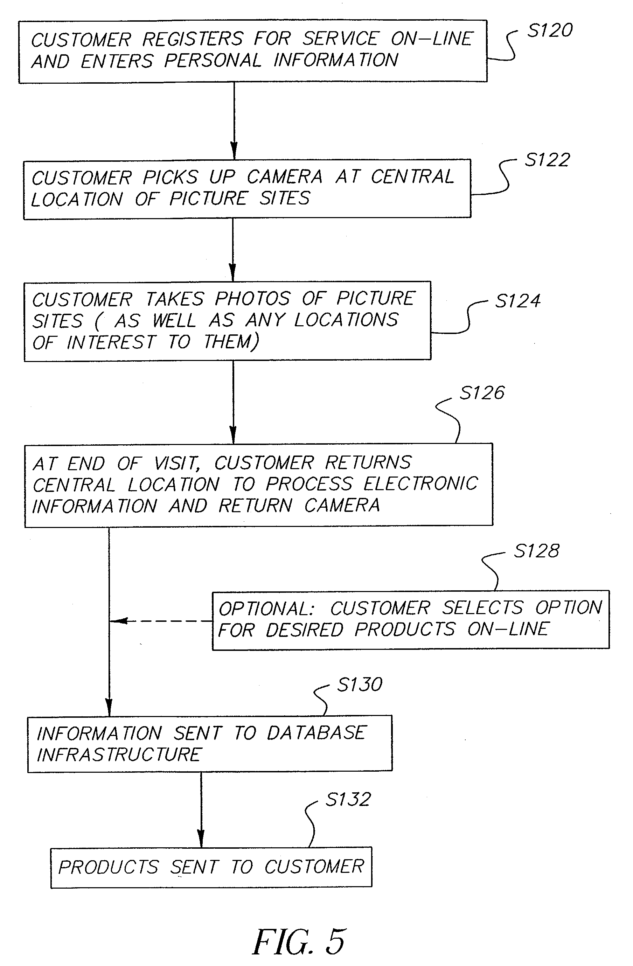

Figure 5 shows the process for the disclosed photographic system, beginning with on-line registration. In step S120, a customer registers for service on-line, for example through the Internet, and enters personal information, such as, name, address, e-mail address, and so on. Then, the customer comes to a central site (step S122), such as the local registration site 82, and picks up a camera at the camera rental site 84. Then, in step S124, the customer takes photos of the attraction sites 20, as well as other locations that may not have any communication stations 22. At the end of the visit to the attraction site, in step S126, the customer returns to the central location, for example the local registration site 82, where the processing subsystem 12 may be located. Here, the customer returns the camera 24a or 24b for processing, and selects the enhanced image products 18 that may be desired. (Alternatively, in a step S128 the customer may select the desired products on-line either preceding the visit or through a mobile on-line connection during the visit.) The images and the location information (record 23) are provided to the processing subsystem 12 in a step S130. The products are composed by the product composer 15, generated by the processor 19 and then provided to the customer (step S132), either on the spot or through e-mail, postal service, or the like.

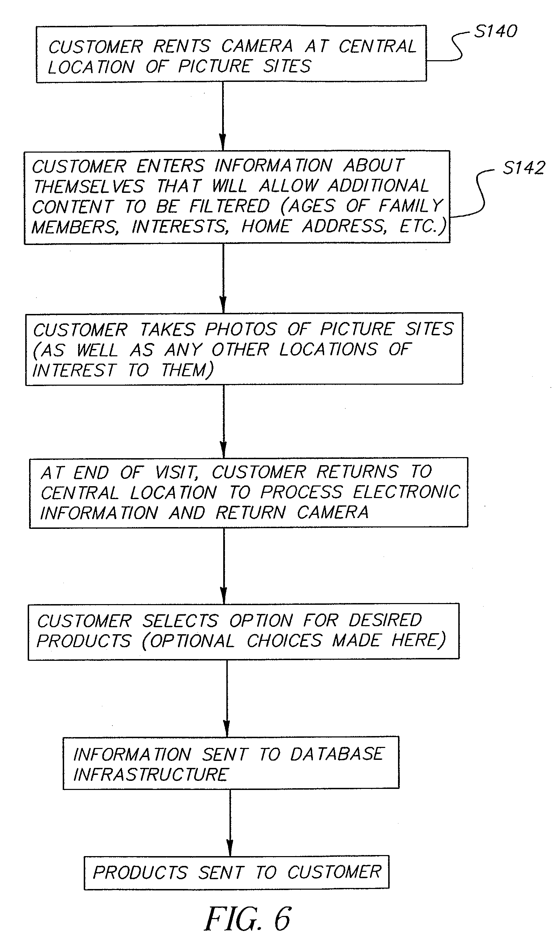

Figure 6 shows the process for the disclosed photographic system, beginning with on-site registration. In step S140, the customer arrives at the local registration site 82, registers for the event and rents a camera. Except for on-site registration, the process resembles that of Figure 5. One difference, which can also be available to on-line registrants, is shown in step S142. Information entered at registration, in step S142, includes personal information that allows additional content to be filtered, that is, certain personal information such as ages of family members, personal interest, home address, etc., that can be used to select particular content from the content database 14. The remaining steps are substantially the same as those described in connection with Figure 5.

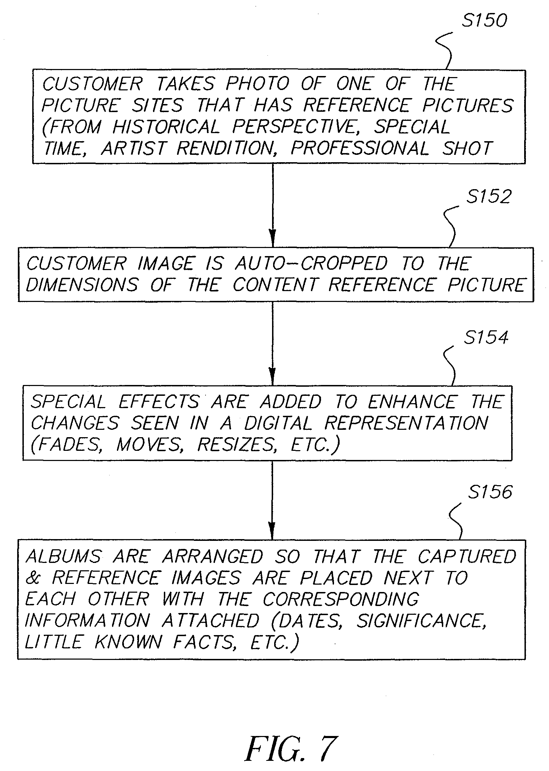

Various types of enhanced photographic products 18 may be produced in accordance with the invention. As shown in Figure 1, an album 18b may be produced with two (or more) photos: one taken by the customer/photographer and the other a stock photo selected from the content database 14. Figure 7 shows a process for selecting a stock photo from the database 14 that relates to the image taken by the customer. In this particular application, the content database 14 has been populated with stock images that relate to particular attraction sites. The images may, for example, represent different historical perspectives, a special or different time, an artist rendition, or just a current professional shot of the same attraction site. In step S150, the customer takes a photo of one of the attraction sites 20 that has corresponding reference pictures stored in the content database 14. When the customer-captured image is processed at the processing subsystem 12, it is auto-cropped in step S152 to the dimensions of the content reference photo from the database. In step S154, special effects may be added to enhance the differences or changes between the images, such as fades, moves, resizes, and so on. Then, in step S156, an album is generated so that the captured and reference image are placed next to each other (as shown by the album 18b in Figure 1) with corresponding information optionally attached or included with the images, such as dates, significance, little known facts, and so forth.

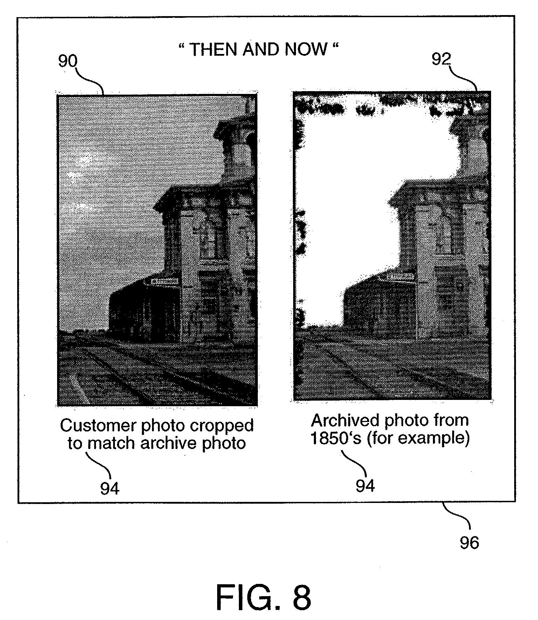

It should be understood that the only requirements for the process shown in Figure 7 are that the customer photographs a site having reference images (step 150) and that the captured and reference image(s) are presented in an attractive manner (step 156) in the enhanced product 18. The intervening stages of cropping (step S154) and special effects (step S156) are desirable, but optional. A particular example of this technique is shown in Figure 8 for a currently captured image 90 of a train depot in an historical park (e.g., a battlefield) and an archived stock photo 92 of the same scene from a century or more earlier. The current image has been auto-cropped (step S152) to match the archived photo, and corresponding information 94 has been added to the photos (step S156). While not a necessary feature of the invention, it may be aesthetically desirable to present the two (then and now) photos on a common album page 96.

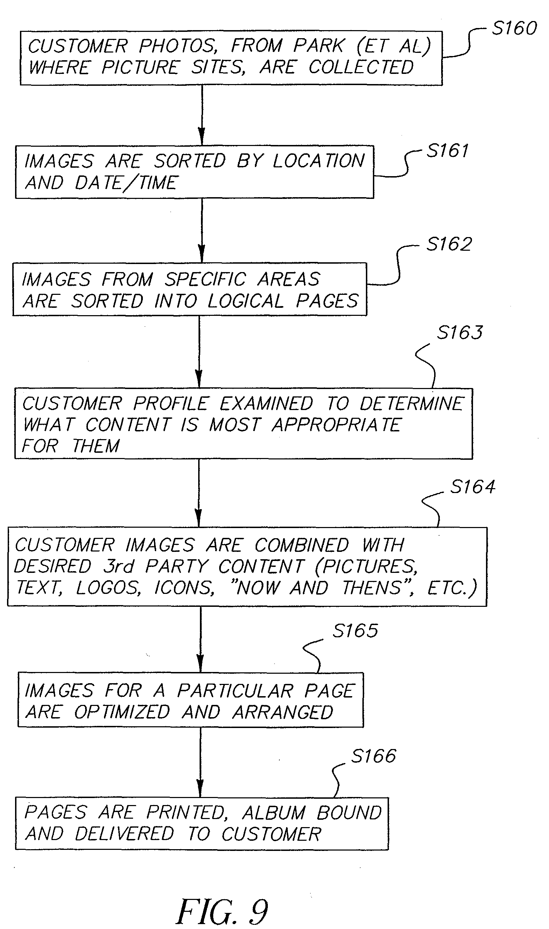

Figure 9 describes a technique for generating an album from customer photos, using content data related to the attraction sites. Initially, in step 160, the customer photos are provided to the processing subsystem 12. The images are sorted in step 161 by date/time and location, as contained in the record 23 received by the processing subsystem 12. Then, in step 162 the images from specific areas are sorted into logical pages, using techniques such as described in the aforementioned auto-albuming patents (U.S. Patents Nos. 6,288,719 and 6,362,900). The customer profile data 88, which may be incorporated into the record 23 or obtained through on-line registration 80 or local registration 82, is examined in step 163 to determine what content is most appropriate for the photos. For example, the age of the customer may dictate youthful vs. adult information. In step 164, the customer images are combined with content from the database 14 and then optimized and arranged for a particular page (step 165). Finally, the pages are printed and the album is generated and delivered to the customer (step 166).

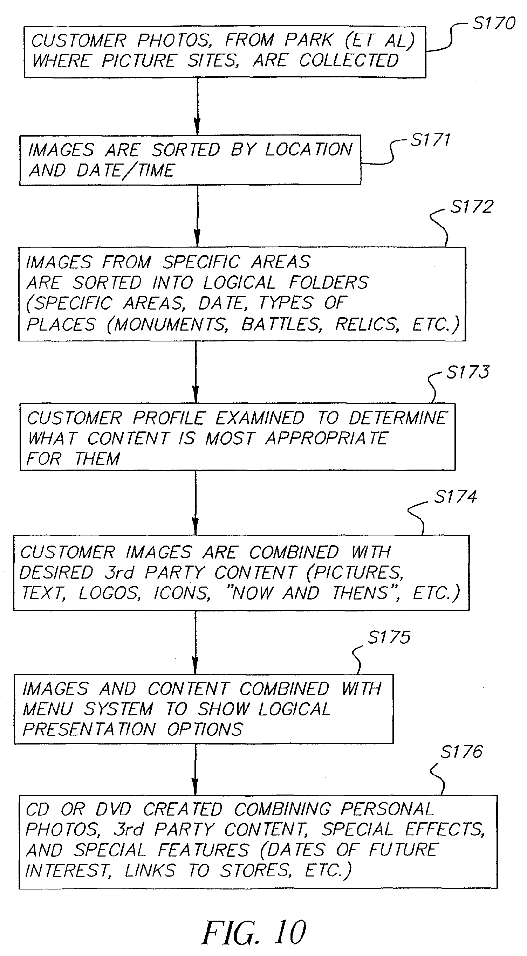

Figure 10 describes a technique for generating a CD or DVD product 18c from customer photos, using content data related to the attraction sites. The initial steps S170-S174 are similar to steps S160 - S164 described in relation to Figure 9, except to the extent that the images from specific areas are sorted into file folders in step 172 (instead of pages), inasmuch as the CD (or DVD) generating program produces data folders rather than pages. Since the CD (or DVD) program provides access to a variety of presentation offerings, in step S175 the image and content are combined with the program's menu system to show the presentation options available to the customer. Then, in step S176, a CD or DVD is generated from the currently captured personal photos and the image content withdrawn from the content database 14. It should be further noted that the CD or DVD may be interactive in the sense that a number of logical presentation options may be generated and then selected by clicking on the appropriate menu entry.

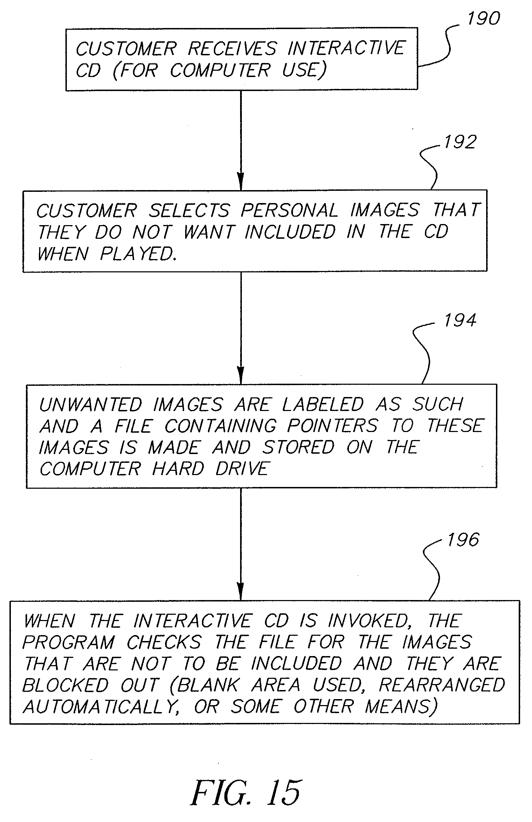

In an automated creation system for a CD or DVD application, the customer may not want to include some of the photos that were taken by the customer, even though the images might be acceptable insofar as quality or some other measure is concerned. The method shown in Figure 15 allows the customer to select images that they do not want included in a display from the interactive CD or DVD. More specifically, in step 190 of Figure 15 the customer receives an interactive CD or DVD specifically for use on his or her computer. In step 192, the customer selects personal images that they do not want included in the CD or DVD when played. The unwanted images are labeled as unplayable in step 194 and this information is stored in a special file (e.g., as a file containing pointers to these images) and stored on the hard drive of the customer's computer. When the interactive CD or DVD is inserted into the computer in step 196, the display program checks the file for images that are not to be included and they are blocked out.

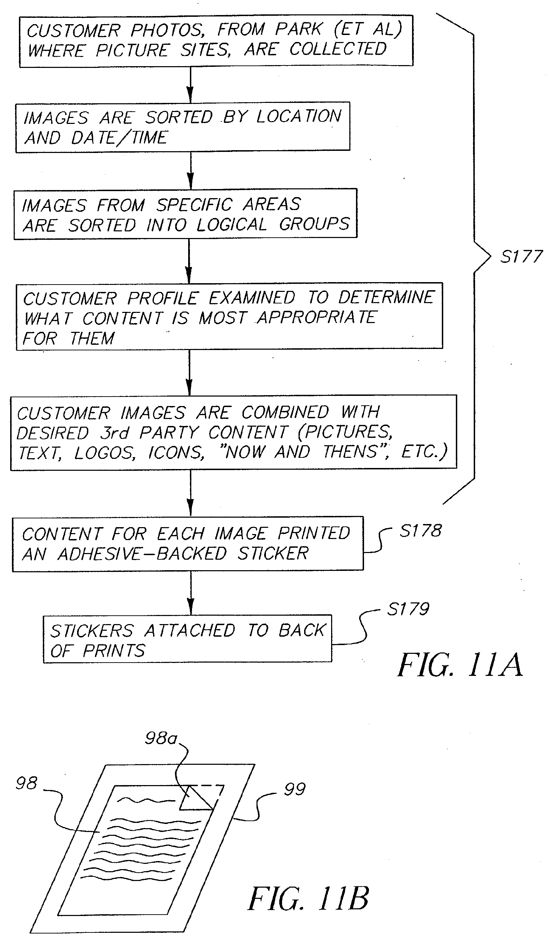

Figure 11A describes a technique for generating photographic prints that are enhanced to include stickers on their backs with the content information printed on the stickers. The initial steps S177 are the same as steps S160-S164 as shown in Figure 9. However, instead of arranging the content to be printed or shown with images of the corresponding attraction sites, the content is printed on stickers in a processing step S178 and the stickers are automatically attached to the back of the photographs in step S179 by the photofinisher. As shown in Figure 11B, the stickers 98 can be manually peeled by a comer 98A thereof from the back of print 99. This is useful in a situation where the customer is employing the photos in an application, like a scrapbook, of the customer's own design and where the descriptive sticker can be fastened wherever desired by the customer in the particular application.

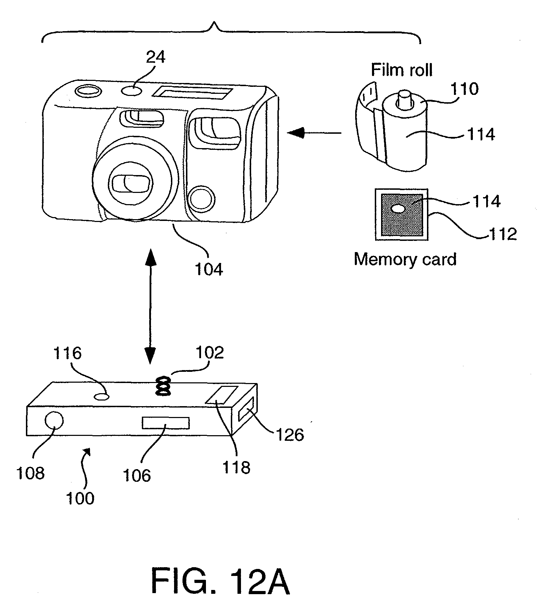

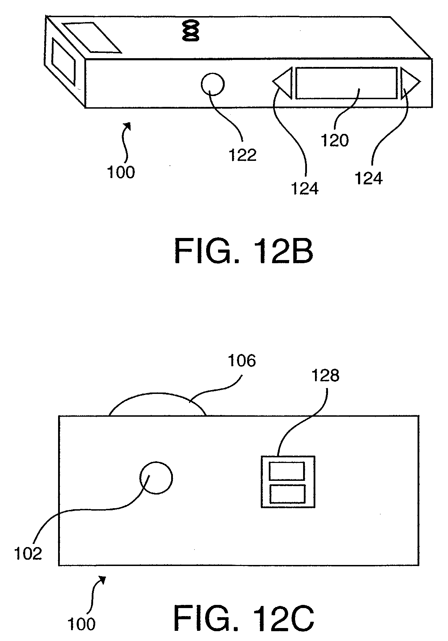

Figures 12A and 12B describe an attachment 100 that may be used with either the digital camera 24a or film camera 24b as a recording device to collect meta data associated with the attraction sites 20 (instead of having this capability incorporated into the camera 24, as suggested in Figure 1). In Figure 12A, the attachment 100 is shown as an elongated device with a screw 102 for connecting with a tripod connection 104 on the camera 24 (Figure 12C shows a bottom view of the attachment 100, revealing the tripod screw connection 102). A thumbwheel 106 is used to attach the tripod screw 102 to the camera. The attachment 100 includes an RF transceiver 108 for communicating with the station 22 at an attraction site 20 (the transceiver 108 may be also used as a wireless connection for communicating with a computer/kiosk and downloading the location records to the processing subsystem 12).

Location data from the attraction sites 20 is collected by the transceiver 108 and stored in a memory in the attachment 100 (this memory is not shown but is similar to the camera memory shown in Figure 2). Image data captured by the camera 24 is stored either in a film roll 110 or a memory card 112 (depending on whether the camera is a film camera or a digital camera). In either case, it is necessary to maintain an association between the images and the location data gathered by the attachment 100. In the present embodiment, this association is provided by a short range RF transmitter 114 attached to the film roll 110 and the memory card 112, which contains and transmits an ID number for the film roll or memory card. The attachment includes a receiver 116 for receiving short range RF from the transmitter 114.

Another requirement is for the attachment to know when to record location data, and which frame to associate the location data with. For a film camera 24b, a micro-electro-mechanical system (MEMS) motion-detecting device 118 is provided on the attachment 100 for detecting motion of the film advance mechanism in the camera, and thereupon indicating a readiness to receive location data synchronized with that particular frame advance. For a digital camera 24a, the attachment 100 includes a user interface comprising an LCD information display 120, a menu button 122 and buttons 124 for cycling through information and otherwise correcting or specifying information. These features are used to synchronize the frame sequence of digital image capture with provision of location data from the attraction sites 20.

Finally, the data gathered by the attachment 100--including the location data, the film roll or memory card ID, and the synchronization of each image with the location data--must be provided to the processing subsystem 12 through an output interface. For instance, such information can be downloaded through the RF transceiver 108 or through a computer connector 126, such as a USB connector. In addition, if the processing subsystem 12 were to include a docking unit, the data may be downloaded through a dock connection 128, such as shown in the bottom view of the camera attachment in Figure 12C.

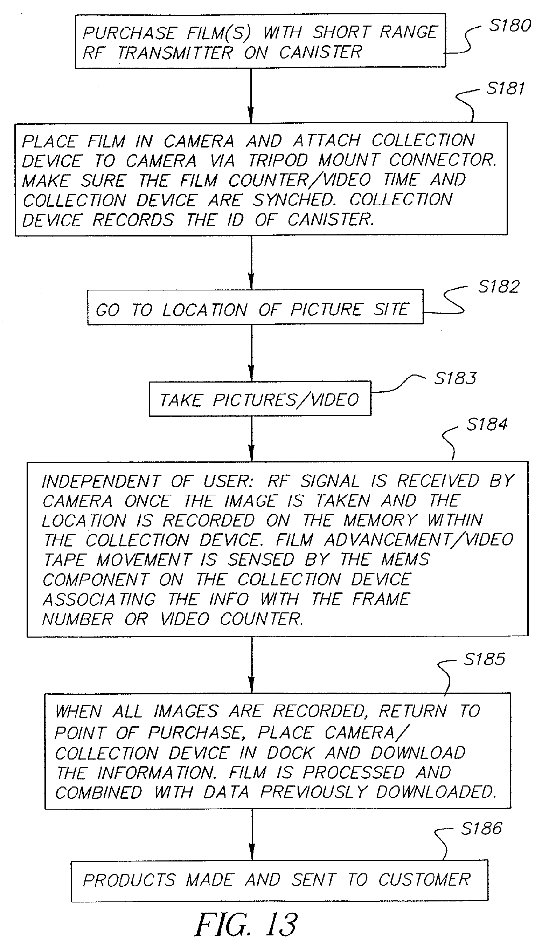

Figure 13 shows a technique for using the attachment 100, in particular with a film camera. To begin with, film is purchased in step S180, for example at the local registration site 82, having the short range RF transmitter 114 already attached to the film canister. Then in step S181 the film is inserted into the camera and the collection device 100 is attached to the camera. It may be desirable to utilize the LCD display 120 to synchronize the film counter/timer on the camera with the counter/timer of the attachment 100. Then the customer takes the camera plus attachment to an attraction site (step S182) and takes some photos (step S183). As the picture is taken, in a step S184 independent of any user interaction, an RF signal is received by the transceiver 108 from a communication station 22. Meanwhile, film advance is sensed by the MEMS device 118 and location data is recorded on memory within the attachment 100, including a reference to the frame or image number. When all images are recorded, the camera is returned to the site 82 or to the processing subsystem 12, and the location data is downloaded (step 185)--either through the transceiver 108, the computer connection 126 or through the dock connection 128. The desired products are generated and given to the customer (step 186). A similar process is followed for use of the attachment 100 with a digital camera.

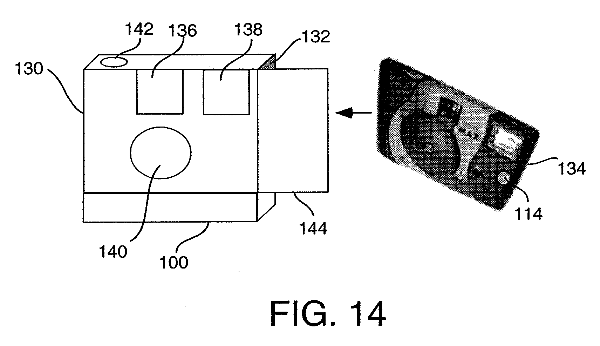

In the case of a single use camera as shown in Figure 14, the attachment 100 shown in Figure 12A may be configured to fit within a bottom portion of a flexible sleeve 130 having an opening 132 on one side thereof for receiving a single use camera 134. The sleeve 130, which holds the attachment 100 in close association with the camera 134, also includes holes 136, 138, 140 and 142 for the viewfinder, flash lens/shutter and shutter button, respectively, of the camera 130. (Given the flexibility of the sleeve, the hole 142 for the shutter button may be omitted if the place to push it is clear to the consumer - e.g., either the sleeve is transparent or marked with the button location.) A short range RF transmitter 114 is attached to the single use camera 134. In operation, the camera 134 is inserted into sleeve 130, the door 144 is closed, and the operation follows the steps described in connection with Figure 13.

The foregoing data gathering techniques can be adapted to a video camera using the same means, only synchronizing the collection device to the time of the tape as opposed to the exposure number on the film.

In summary, the enhanced photo products provided in accordance with the various embodiments of the invention may include without limitation some or all of the following:
- Additional related images (e.g., pictures taken in better weather, historical photos related to the site, artist's renditions of the site, professional shots of the site).
- Additional information (text about the site, maps of the site, logos and graphics associated with the sites, taking conditions).
- Panoramas and 360s (e.g., putting consumer images into a historical panorama).
- Virtual reality products, e.g., utilizing such platforms as Apple Computer's QuickTime VR™.
- Movies (from the site, from 3^{rd} parties, wholly owned by 3^{rd} parties).
- Re-enactments of historic events at the site (photos and movies).
- Enhancements to personal photos (auto crop, auto zoom, different areas blurred/sharpened, special effects, highlighting areas of historical interest).
- "Then and now" pictures/animations showing the differences from the present consumer-captured images and historic images from similar vantage points.
- Features on the CD or DVD allowing for unwanted pictures to be removed from the playback.

With location information and other (stock) photos related to the captured images, it is possible to automatically create a 360° panorama from the consumer's photos and to fill in missing pieces of the consumer-captured (partial) panorama with stored images. It is further possible to automatically identify objects within the photo and identify key pieces of the photo or attach other content in a digital representation like Picture CD. This object identification also allows for general image enhancement of sharpness, contrast of specific objects, color enhancement, and the ability to create multiple views from the same photo (different areas in focus, for example). It can also allow for automated comparisons of photos taken today and those of previous timeframes, including antiquated ones and artist's renditions.

While the processing site 12 has been shown as being external to, and separate from, the camera subsystem 10, in some embodiments of the invention the processing may be shared with, or wholly within, the camera 24. For example, the activity of analyzing and identifying the picture site, instead of being carried out by the processor 16, may instead be carried out by the processor in the camera 24, for example by the microprocessor 42 in the digital camera 24a. For this purpose, the camera needs to access the database 14. This can be done by uplinking the camera to the database 14 by any conventional means, such as a network connection (e.g., the Internet) or a tethered connection to the processing subsystem 12. Alternatively, the database can be resident in, or downloaded to, the camera 24 (e.g., in the memory 48) or it can be stored on removable memory (such as the removable memory 21 shown in Figure 1) that can be introduced to the camera 24. Furthermore, the generation of the enhanced photo products can be done within the camera 24 by the microprocessor 42 and communicated to an external receiver, such as through the wireless transceiver 30 or like type of connection. This is particularly feasible where the product is intended for Internet distribution. Alternatively, the functionality of the product composer 15 can be included in the microprocessor 42 and rendered product code can be provided by the camera 24 through suitable connection with an external printer, CD or DVD writer, or the like. Since, in these embodiments, the identification of the picture site is performed in the camera 24, and content pertaining to the picture site is accessible within and by the camera itself, the processor 42 in the camera can identify venue specific products from the database and offer the photographer a choice of products, e.g., as a suitable menu of choices presented on the LCD 50.

## Claims

1. A photographic system for producing enhanced products from pictures of one or more known picture sites situated at predetermined locations and representing content of interest to a photographer, said system comprising:
a database containing content pertaining to the picture sites, said content including image content pertaining to the picture sites;
a camera for capturing images of the picture sites;
a processor for relating the captured images to the locations of picture sites, thereby identifying locations of the images, said processor using the locations of the images to access selected content in the database pertaining to the picture sites; and
a product generator for generating enhanced image products by combining the image content pertaining to the picture sites with the captured images of the picture sites to generate a new image product.

2. The photographic system as claimed in claim 1 wherein the camera records location data useful for identifying the picture sites, and the processor relates the location data recorded together with the captured images to the picture sites to identify the location of the images.

3. The photographic system as claimed in claim 1 wherein the database contains reference images of picture sites and the processor relates the captured images to the reference images to identify the locations of the images.

4. The photographic system as claimed in claim 1 wherein the product composer generates an enhanced image product from a captured image by combining a historical image representative of the picture site with the captured image of the picture site to generate a new image product.

5. A photographic system for producing enhanced products from pictures of one or more known picture sites situated at predetermined locations and representing content of interest to a photographer, said system comprising:
a database containing content pertaining to the picture sites;
a camera for capturing images of the picture sites;
a processor for relating the captured images to locations of the picture sites, thereby identifying locations of the images, said processor using the locations of the images to access selected content in the database pertaining to the picture sites; and
a product generator for generating enhanced image products from the images by utilizing the selected content pertaining to the picture sites to automatically adjust the images, thereby modifying pictorial content or representation of the images.

6. The photographic system as claimed in claim 5 wherein pictorial content or representation of the images is modified by automatically resizing the images.

7. The photographic system as claimed in claim 5 wherein pictorial content or representation of the images is modified by automatically cropping the images.

8. The photographic system as claimed in claim 5 wherein pictorial content or representation of the images is modified by automatically zooming the images.

9. The photographic system as claimed in claim 5 wherein pictorial content or representation of the images is modified by automatically enhancing the images.

10. A photographic system for producing enhanced products from pictures of one or more known picture sites situated at predetermined locations and representing content of interest to a photographer, said system comprising:
a database containing content pertaining to the picture sites, said content including reference images pertaining to the pictorial content of the picture sites;
a camera for capturing images of the picture sites;
a processor including an image analysis algorithm for relating the captured images to the pictorial content of one or more of the reference images, thereby identifying locations of the captured images; said processor using the locations of the captured images to access selected content in the database pertaining to the picture sites; and
a product generator for generating enhanced image products from the captured images by utilizing the selected content pertaining to the picture sites.

11. A recording device for use in gathering meta data associated with images captured by a camera, said meta data provided by one or more known picture sites situated at predetermined locations and representing content of interest to a photographer, said device comprising:
means for attaching the recording device to the camera;
a communication device for communicating with the picture site and receiving the meta data from the picture site;
a memory for storing the meta data; and
means for synchronizing the storage of the meta data with an image captured by the camera.

12. The recording device as claimed in claim 11 for use with a film camera, wherein the synchronizing means comprises a device for sensing motion indicative of a film advance.

13. The recording device as claimed in claim 11 for use with a digital camera, wherein the synchronizing means comprises a user interface for synchronizing the frame sequence of digital image capture with reception of meta data.

14. The recording device as claimed in claim 11 wherein the meta data comprises location data specifying information indicative of location of the picture site.

15. The recording device as claimed in claim 11 further including an output interface for downloading the meta data from the receiving device to an external processor.

16. The recording device as claimed in claim 11 wherein the camera includes a short range RF transmitter on a recording medium and the recording device further includes a receiver for receiving meta data from the transmitter identifying the recording medium.

17. The recording device as claimed in claim 11 for use with a single use film camera having a lens and viewfinder, wherein the recording device further includes a flexible sleeve into which the single use camera is inserted, said sleeve including openings for the lens and viewfinder.

18. A photographic system for producing enhanced products from pictures of one or more known picture sites situated at predetermined locations and representing content of interest to a photographer, said system comprising:
a database containing a library of stored content, including images, pertaining to the picture sites;
a camera for capturing images at a particular picture site location and for recording date/time information with the images;
a recording device carried by the photographer for recording date/time and location information;
a processor for correlating the date/time information recorded by the camera and the recording device in order to relate the location information to the captured images and to a subset of stored content, including images, in the library that pertain to the particular picture site location, said processor processing the subset of stored content, including images, and the captured images to identify the stored content of the picture site that is shown in the captured images; and
a product generator for generating an enhanced image product by associating the identified stored content of the picture site with the captured images to generate a new image product.
